(19) Europäisches Patentamt / European Patent Office / Office européen des brevets

(11) **EP 4 290 472 A1**

(12) # EUROPEAN PATENT APPLICATION

(43) Date of publication:
**13.12.2023 Bulletin 2023/50**

(51) International Patent Classification (IPC):
***G06V 20/52*** *(2022.01)*

(21) Application number: **22177431.8**

(22) Date of filing: **07.06.2022**

(52) Cooperative Patent Classification (CPC):
**G06V 20/52**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
- **MIN, Chulhong
  Cambridge CB2 9AE (GB)**
- **ACER, Utku Gunay
  2660 Antwerpen (BE)**
- **KAWSAR, Fahim
  Cambridge CB22 5FT (GB)**
- **YI, Juheon
  Seoul 135-847 (KR)**

(74) Representative: **Swindell & Pearson Limited
48 Friar Gate
Derby DE1 1GY (GB)**

(54) ## OBJECT IDENTIFICATION

(57)    A system comprising:
multiple cameras including at least a first camera having a first field of view and a second camera having a second field of view, wherein the second camera is different to the first camera and the second field of view is different to the first field of view; and
identification means for identifying an object captured by one or more of the multiple cameras, wherein the identification means comprises means for:
using visual feature matching for a detected object in the first field of view of the first camera to identify the detected object in the first field of view of the first camera as a first object; and
using an expected location of the first object in the second field of view of the second camera to identify a detected object in the second field of view as the first object.

EP 4 290 472 A1

**Description**

TECHNOLOGICAL FIELD

Embodiments of the present disclosure relate to object identification. Some relate to object identification in multi-camera, multi-target systems.

BACKGROUND

Computer vision enables the processing of a field of view of a camera, captured as an image, to detect and to identify an object in the field of view as a target object.

Object identification uses visual feature matching to identify an object. Visual feature matching is computationally intensive. The computational burden grows with the size of the search space e.g., the size or number of fields of view to search and also with the number of target objects to search for.

BRIEF SUMMARY

According to various, but not necessarily all, embodiments there is provided a system comprising:

multiple cameras including at least a first camera having a first field of view and a second camera having a second field of view, wherein the second camera is different to the first camera and the second field of view is different to the first field of view; and

identification means for identifying an object captured by one or more of the multiple cameras, wherein the identification means comprises means for:

using visual feature matching for a detected object in the first field of view of the first camera to identify the detected object in the first field of view of the first camera as a first object; and

using an expected location of the first object in the second field of view of the second camera to identify a detected object in the second field of view as the first object.

In some but not necessarily all examples, the detected object in the first field of view is initially identified using visual feature matching and thereafter tracked across fields of view of different cameras of the multiple camera system using an expected location of the first object in the fields of view of the different cameras.

In some but not necessarily all examples, the apparatus comprises means for using visual feature matching for the detected object in the first field of view of the first camera to identify the detected object in the first field of view of the first camera as a first object, wherein the visual feature matching is performed at the first camera or wherein the visual feature matching is distributed across the first camera and at least one other camera of the multiple cameras.

In some but not necessarily all examples, the apparatus comprises the second camera means for using an expected location of the first object in the second field of view of the second camera to identify the detected object in the second field of view as the first object.

In some but not necessarily all examples, the first camera is comprising means for providing to other ones of the multiple cameras an indication of a location of the detected object in the first field of view of the first camera and an indication of the identify of the detected object as the first object.

In some but not necessarily all examples, the indication of the location of the detected object in the first field of view of the first camera is provided as an indication of a bounding box location.

In some but not necessarily all examples, the indication of the location of the detected object in the first field of view of the first camera is provided to a selected sub-set of the multiple cameras based on the location of the detected object in the first field of view and a spatial relationship of overlapping fields of view of the other ones of the multiple cameras.

In some but not necessarily all examples, the apparatus comprises means for selecting the sub-set of the multiple cameras based on an expected location of the first object relative to the fields of views of the cameras wherein the expected location of the first object lies within the fields of view of the cameras in the sub-set and wherein the expected location of the first object lies outside the fields of view of the cameras not in the first sub-set.

In some but not necessarily all examples, the apparatus comprises means for selecting a sub-set of a field of view of a camera for object detection based on an expected location of the first object in the field of view.

In some but not necessarily all examples, the apparatus is configured to determine the expected location of the first object in the second field of view of the second camera, wherein the second field of view is constrained to be simultaneous with or contemporaneous with the first field of view of the first camera or is constrained to directly follow in time the first field of view of the first camera or is constrained to have a temporal relationship with the first field of view of the first camera that maintains a calculated uncertainty in the expected location below a threshold level.

In some but not necessarily all examples, the first field of view partially overlaps the second field of view at a first overlapping field of view, and at least a third camera in the multiple camera system has a third field of view that partially overlaps the second field of view at a second overlapping field of view, but does not overlap the first overlapping field of view, the system comprising means for:

identifying a detected object in the first field of view, outside the first overlapping field of view, as the first object;

detecting when the detected object, identified as the first object, in the first field of view enters the first overlapping field of view, and consequently identifying a corresponding detected object in the second field of view, inside the overlapping field of view, as the first object;

detecting when the detected object, identified as the first object, in the second field of view enters the second overlapping field of view, and consequently identifying a corresponding detected object in the third field of view, inside the second overlapping field of view, as the first object.

In some but not necessarily all examples, the apparatus is configured to perform visual feature matching for a target object in the fields of view of the multiple cameras to identify the target object in one or more field of view of the multiple cameras, the system comprising means for:

creating a sequence of cameras and performing visual feature matching for the target object in the fields of view of the cameras in the sequence in the order of the sequence to identify the target object in one or more field of view of the cameras in the sequence; and/or

creating a sequence of detected objects and performing visual feature matching for the target object for the detected objects in the sequence in the order of the sequence to identify the target object.

According to various, but not necessarily all, embodiments there is provided a camera of a multi-camera system comprising identification means for identifying an object captured by a multiple camera system, wherein the identification means comprises means for:

using visual feature matching for a detected object in a field of view of the camera to identify the detected object in the field of view of the camera as a first object; and

using an expected location of the first object in a second field of view of a second camera to identify a detected object in the second field of view as the first object, wherein the second camera is different to the camera and the second field of view is different to the field of view.

According to various, but not necessarily all, embodiments there is provided an apparatus comprising identification means for identifying an object captured by the apparatus, wherein the identification means comprises means for: using visual feature matching for a detected object in a field of view of the apparatus to identify the detected object in the field of view of the apparatus as a first object; and using an expected location of the first object in a second field of view of a second apparatus to identify a detected object, received from a second apparatus, in the second field of view as the first object, wherein the second apparatus is different to the apparatus and the second field of view is different to the field of view.

According to various, but not necessarily all, embodiments there is provided a computer program that, when executed by the at least one processor, cause:

using visual feature matching for a detected object in a first field of view of a first camera to identify the detected object in the first field of view of the first camera as a first object; and

using an expected location of the first object in a second field of view of a second camera to identify a detected object in the second field of view as the first object, wherein the second camera is different to the first camera and the second field of view is different to the first field of view.

According to various, but not necessarily all, embodiments there is provided a computer program comprising instructions that, when executed by the at least one processor, cause:

using visual feature matching for a detected object in a first field of view of a first apparatus to identify the detected object in the first field of view of the first apparatus as a first object; and

using an expected location of the first object in a second field of view of a second apparatus to identify a detected object, received from the second apparatus, in the second field of view as the first object, wherein the second apparatus is different to the first apparatus and the second field of view is different to the first field of view.

According to various, but not necessarily all, embodiments there is provided a computer implemented method comprising:

using visual feature matching for a detected object in a first field of view of a first camera to identify the detected object in the first field of view of the first camera as a first object; and
using an expected location of the first object in a second field of view of a second camera to identify a detected object in the second field of view as the first object, wherein the second camera is different to the first camera and the second field of view is different to the first field of view

According to various, but not necessarily all, embodiments there is provided a computer implemented method comprising:

using visual feature matching for a detected object in a first field of view of a first apparatus to identify the detected object in the first field of view of the first apparatus as a first object; and
using an expected location of the first object in a second field of view of a second apparatus to identify a detected object, received from the second apparatus, in the second field of view as the first object, wherein the second apparatus is different to the first camera and the second field of view is different to the first field of view

According to various, but not necessarily all, embodiments there is provided an apparatus comprising:

at least one processor; and

at least one memory including computer program code,
the at least one memory and the computer program code configured to, when executed by the at least one processor, cause the apparatus at least to:

use visual feature matching for a detected object in a first field of view of a first camera to identify the detected object in the first field of view of the first camera as a first object; and
use an expected location of the first object in a second field of view of a second camera to identify a detected object in the second field of view as the first object, wherein the second camera is different to the first camera and the second field of view is different to the first field of view.

According to various, but not necessarily all, embodiments there is provided an apparatus comprising:

at least one processor; and

at least one memory including computer program code,
the at least one memory and the computer program code configured to, when executed by the at least one processor, cause the apparatus at least to:

use visual feature matching for a detected object in a first field of view of a first apparatus to identify the detected object in the first field of view of the first apparatus as a first object; and
use an expected location of the first object in a second field of view of a second apparatus to identify a detected object, received from the second apparatus, in the second field of view as the first object,
wherein the second apparatus is different to the first apparatus and the second field of view is different to the first field of view.

According to various, but not necessarily all, embodiments there is provided a system comprising:

multiple cameras including at least a first camera having a first field of view and a second camera having a second field of view, wherein the second camera is different to the first camera and the second field of view is different to the first field of view; and
means for

- identifying an object captured by one or more of the multiple cameras:
- visual feature matching for detecting an object captured in the first field of view of the first camera to identify the detected object in the first field of view of the first camera as a first object; and

- using an expected location of the first object in the second field of view of the second camera to identify a detected object in the second field of view as the first object.

According to various, but not necessarily all, embodiments there is provided a camera of a multi-camera system comprising means for

- identifying a captured object received from the multiple camera system, ;
- visual feature matching for detecting and object in a field of view of the camera to identify the detected object in the field of view of the camera as a first object; and
- using an expected location of the first object in a second field of view of a second camera to identify a detected object in the second field of view as the first object, wherein the second camera is different to the camera and the second field of view is different to the field of view.

According to various, but not necessarily all, embodiments there is provided a system comprising:

multiple cameras including at least a first camera having a first field of view and a second camera having a second field of view, wherein the second camera is different to the first camera and the second field of view is different to the first field of view; and
means for

- using visual feature matching for a detected object in the first field of view of the first camera to identify the detected object in the first field of view of the first camera as a first object; and
- using an expected location of the first object in the second field of view of the second camera to identify a detected object in the second field of view as the first object.

According to various, but not necessarily all, embodiments there is provided examples as claimed in the appended claims.

BRIEF DESCRIPTION

Some examples will now be described with reference to the accompanying drawings in which:

FIG. 1 shows an example of the subject matter described herein;
FIG. 2A shows another example of the subject matter described herein;
FIG. 2B shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;

DETAILED DESCRIPTION

In the following description a class (or set) can be referenced using a reference number without a subscript index e.g., 10 and an instance of the class (member of the set) can be referenced using a reference number with a subscript index e.g., 10_1 or 10_i. A numeric index e.g., 10_1 indicates a particular instance of the class (member of the set). A letter index e.g., 10_i indicates any instance of the class (member of the set) unless otherwise constrained.

The FIGs illustrate a system 100 comprising:

multiple cameras 10 including at least a first camera 10_1 having a first field of view 30_1 and a second camera 10_2 having a second field of view 30_2, wherein the second camera 10_2 is different to the first camera 10_1 and the second field of view 30_2 is different or at least partly different to the first field of view 30_1; and
identification means 20 for identifying an object 40 captured by one or more of the multiple cameras 10, wherein the identification means 20 comprises means for:

using visual feature matching for a detected object 42 in the first field of view 30_1 of the first camera 10_1 to identify the detected object 42 in the first field of view 30_1 of the first camera 10_1 as a first object 40; and using an expected location 50 of the first object 40 in the second field of view 30_2 of the second camera 10_2 to identify a detected object 42 in the second field of view 30_2 as the first object 40.

Detection of an object 40 is the classification of an area in a field of view 30 of a camera 10 as being an object. In some examples, this classification can have one or more sub-classes. For example, the object 40 can be classified as a moving object because it changes location and/or size over time. For example, the object 40 can be classified as a vehicle because it has wheels. The detection is normally a first stage, to identify an area of a field of view that should be intensively processed for visual features.

Detection classifies an object 40 as a member of a multi-member detection set. It does not disambiguate the detected object from other members of the multi-member detection set.

For object detection, the main objective is to classify the type of object, i.e., either a person, a vehicle, a phone, etc. Thus, when there are multiple objects of the same type (e.g., multiple people), the detection model abstracts appearance and find the *common* characteristics. It detects common visual characteristics. A neural network can be trained to find and use the common characteristics of the class that distinguish this class from other classes. It operates at the class level of abstraction.

Identification classifies an object 40 as a member of a subset of the multi-member detection set (the subset may be a unique set, that is a set of one). Identification disambiguates the detected object from other members of the multi-member detection set.

For object identification, the main objective is to distinguish objects of the same type. Thus, when there are multiple objects of the same type, the identification (also called re-id) parameterizes *distinctive* characteristics of appearance of the type of object (e.g., colors) and distinguish each object accordingly. A neural network can be trained to find and use the distinctive characteristics for distinguishing objects of the same type (class). It operates at the object level of abstraction and occurs after the object level abstraction (after detection).

Object detection and object identification can therefore be differentiated based on the training data used to train models and its level of abstraction and the order in which they are performed.

The identification process is therefore generating more comparison features than a detection process and is consequently more computationally intensive.

The identification process considers perspective of the object (e.g., homographies) so that images of an object from different perspectives are classified (identified) as the same object and not classified (identified) as different objects.

The identification process therefore is designed to solve the 'correspondence problem'. That is, the process accurately identifies an object when the object in the image can be at different distances and orientations to the camera. The correspondence problem can be expressed as "Given two images of the same 3D scene, taken from different points of view, the correspondence problem refers to the task of finding a set of features in one image which can be matched to the same features in other image." The identification process therefore involves feature matching whether performed implicitly e.g., using neural networks or explicitly e.g., using scale invariant feature transforms, for example.

The detection process does not need to solve the correspondence problem. In at least some examples, the detection process does not solve the correspondence problem.

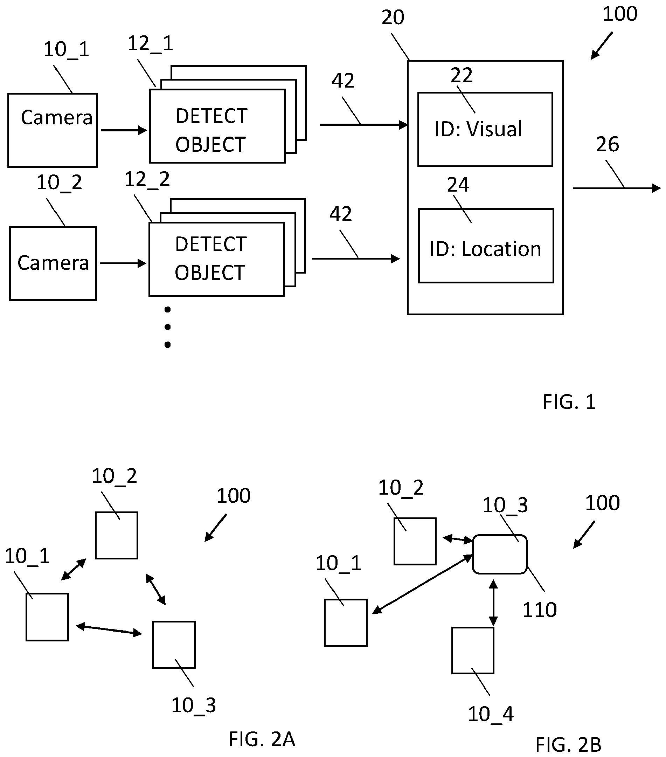

FIG 1 illustrates an example of a system 100 for identifying an object 40.

The system 100 comprises multiple, different cameras 10 including at least a first camera 10_1 and a second camera 10_2. Each camera 10_i has a corresponding field of view 30_i (not illustrated in FIG 1). At least some of the fields of view are different. In some examples, one or more of the fields are not overlapping. In some other examples, one or more of the fields are at least partially overlapping

The system 100 comprises identification means 20 for identifying an object 40 (not illustrated in FIG 1) captured by one or more of the multiple cameras 10_i.

The system 100 has detection means 12_i associated, for example, installed and/or included, with the cameras 10. The detection means 12_i are configured to detect a presence of an object 40 within a field of view 30_i (not illustrated in FIG 1) of a camera 10_i. When the detection means 12_i detects a presence of an object 40, the detected object 42 can be labelled for the identification means 20, for example, by using a bounding box within the field of view 30_i. In some examples, the identification means 20 can be associated, for example, installed and/or included, with one or more of the cameras 10.

The identification means 20 comprises visual-feature-matching identification block 22 and expected-location identification block 24.

The visual-feature-matching identification block 22 is configured to use visual feature matching for the detected object 42 in the field of view 30_i of the camera 10_i to identify the detected object 42 in the field of view 30_j of the camera 10_j as a particular object 40.

The expected-location identification block 24 is configured to use an expected location 50 of the particular object 40 in the field of view 30_j of a different camera 10_j to identify a detected object 42 in the field of view 30_j as the particular object 40. The identification result 26 can then be further processed. The expected-location identification block 24 is configured to identify the detected object in the field of view 10_j as the particular object (previously identified using visual feature matching), without using visual feature matching.

Thus, the visual-feature-matching identification block 22 is used for the initial identification of a detected object 42 using visual feature matching. The detected object 42 in the field of view 30_i is initially identified using the visual feature matching by visual-feature-matching identification block 22 and thereafter tracked, expected-location identification block 24, across fields of view 30_j of different cameras 10_j of the multiple camera system 100 using an expected location 50_j of the particular object 40 in the fields of view 30_j of the different cameras 10_j.

This is a 'feed forward' application of spatio-temporal tracking across fields of view, particularly fields of view of different cameras 10. The system 100 goes from one identification by visual-feature-matching to multiple identifications by spatial-temporal tracking across cameras 10. The 'identification' without feature analysis is based on a detected target at an expected location. The identification by visual feature matching preferably occurs once and is shared for future object identification by expected location in future fields of view 30 of one or more cameras 10. The identification can for example be shared via camera collaboration, by for example sending information to other cameras 10 that identifies an object 40 and provides an expected location 50 of the object 40 or information for determining an expected location 50 of the object 40 in a camera field of view 30.

The visual feature matching performed by visual-feature-matching identification block 22 can be performed at a single camera, for example, the camera 10_i, or can be performed across multiple cameras 10 including or not including the camera 10_i. The visual feature matching can be distributed across the first camera 10_1 and at least one other camera of the multiple cameras 10_i.

If identification is distributed across multiple cameras, the identification at a camera can be limited to analysis of a cropped portion(s) of the field of view captured by that camera 10. If the object 40 has not previously been identified, then it can be expected to be located an 'entry points' within the field of view 30. An entry point could be an edge portion of the field of view or an edge portion that comprises a route for the expected object (e.g., path, road etc). An entry point could be a door or some other portion of the field of view 30 at which accurate visual feature matching is expected to be newly successful for the object.

The expected-location identification block 24 uses the expected location 50 of the identified object 40 in the field of view 30_j of one or more other, different cameras 30_j to identify a detected object 42 in the field of view 30_j as the previously identified object (previously identified by the visual-feature-matching identification block 22 as described above).

The expected-location identification block 24 can be located at a single camera, for example, the camera 10J, or can be performed across multiple cameras 10 including or not including the camera 10_j and/or the camera 10_i. Therefore, the camera 10_j can use an expected location 50 of the previously identified object (first object) in the field of view 30_j of that camera 10_j to identify a detected object 42 in the field of view 30_j as the first object.

The system 100 can have different topologies. In some but not necessarily all examples, the system 100 consists of only cameras 10. FIGs 2A and 2B illustrate example topologies of the system 100 where the system 100 consists of only cameras 10. The functions attributed to the system 100 are performed in one or more cameras 10. FIG 2A, is a peer-to-peer network with no central hub. Any camera 10 can communicate with any other camera 10. FIG 2B, is a hub-and-spoke network with a camera 10_3 operating as a central hub, e.g. a managing device, managing communication and/or processes 100 between and/or in the devices 10. Any of the peripheral cameras 10_1, 10_2, 10_4 can communicate with only the central hub camera 10_3. In some examples, the hub camera 10_3 can be fixed or can change, for example dynamically, its location and/or field of view. In some other examples, the one or more of the peripheral cameras 10_1, 10_2, 10_4 can be fixed or can change, for example dynamically, its location and/or field of view. In some other examples, the one or more of the peripheral cameras 10_i can be fixed or can change, for example dynamically, its location and/or field of view. Other network topologies are possible.

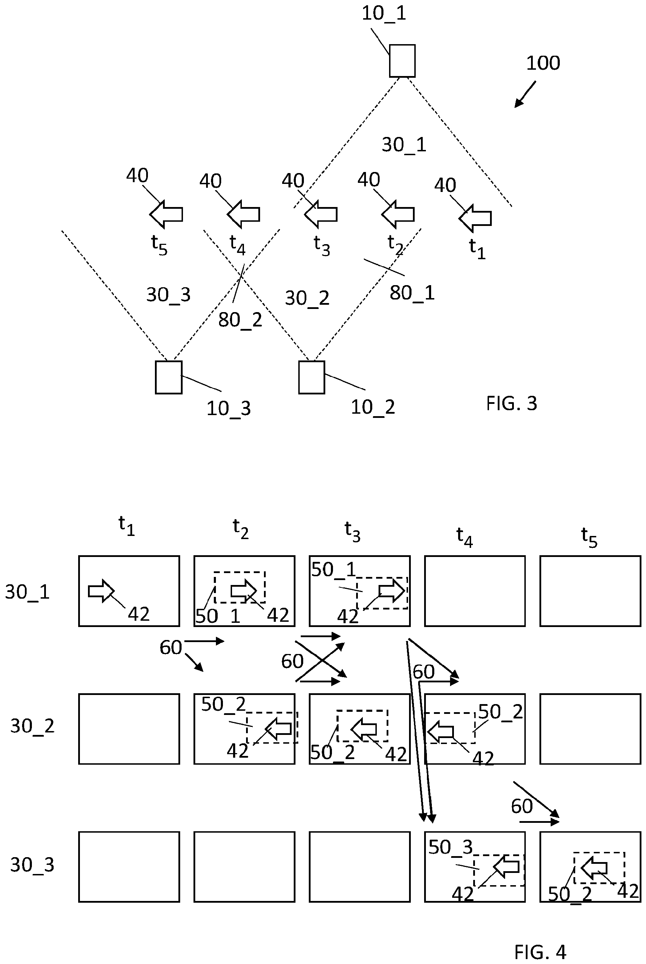

As illustrated in FIG 3 the system 100 can comprise least a first camera 10_1 having a first field of view 30_1, a second camera 10_2 having a second field of view 30_2 and a third camera 10_3 having a third field of view 30_3. The first field of view 30_1 is different to the second field of view 30_2 and the third field of view 30_3. The second field of view 30_2 is different to the first field of view 30_1 and the third field of view 30_3. The third field of view 30_3 is different to the second field of view 30_2 and the first field of view 30_1.

In the illustrated example, the first field of view 30_1 partially overlaps the second field of view 30_2 at a first overlapping field of view 80_1 but does not overlap the third field of view 30_3 and the third field of view 30_3 partially overlaps the second field of view 30_2 at a second overlapping field of view 80_2 but does not overlap the first field of view 30_1. The second field of view 30_3 therefore partially overlaps the first field of view 30_1 and partially overlaps the third field of view 30_3.

The movement of an object 40 is illustrated in FIG 3. The location of the object 40 at sequential times $t_1$, $t_2$, $t_3$, $t_4$, $t_5$ is illustrated. The object 40 enters the first field of view 30_1. The object then moves across the first field of view 30_1 into the second field of view 30_2 (the first overlapping field of view 80_1). The object 40 passes through the first overlapping field of view 80_1 before leaving the first field of view 30_1. The object moves across the second field of view 30_2 into the third field of view 30_3 (the second overlapping field of view 80_2). The object 40 passes through the second overlapping field of view 80_2 before leaving the second field of view 30_1.

At time $t_1$, the object 40 is in the first field of view 30_1 only. At time $t_2$, the object 40 is in the first overlapping field of view 80_1 and is in both the first field of view 30_1 and the second field of view 30_2 but is not in the third field of view 30_3. At time $t_3$, the object 40 is in the first overlapping field of view 80_1 and is in both the first field of view 30_1 and the second field of view 30_2 but is not in the third field of view 30_3. At time $t_4$, the object 40 is in the second overlapping field of view 80_2 and is in both the second field of view 30_2 and the third field of view 30_3 but is not in the first field of view 30_1. At time $t_5$, the object 40 is in third field of view but is not in the second field of view 30_2 nor the first field of view 30_1.

It should be understood that the arrangement of the fields of view 30 and the movement of the object 40 is merely an example and different arrangements and movements can occur. Also, the instances of time $t_1, t_2, t_3, t_4, t_5$ are merely indicative times and time intervals. Different and additional times could be used, for example, times intermediate of the times indicated.

FIG 4 illustrates the fields of view 30_1, 30_2, 30_3 of the cameras 10_1, 10_2, 10_3 at times $t_1, t_2, t_3, t_4, t_5$ after object detection. At time $t_1$, the detected object 42 is to the left of the first field of view 30_1 and is moving to the right. The detected object 42 is not present if the other fields of view 30_2, 30_3. At time $t_2$, the detected object 42 is in the first overlapping field of view and is therefore in both the first field of view 30_1 and the second field of view 30_2 but is not in the third field of view 30_3. The detected object 42 is in the center of first field of view 30_1 and is moving to the right. The detected object 42 is in the right of second field of view 30_2 and is moving to the left.

At time $t_3$, the detected object 42 is in the first overlapping field of view and is therefore in both the first field of view 30_1 and the second field of view 30_2 but is not in the third field of view 30_3. The detected object 42 is in the right of first field of view 30_1 and is moving to the right. The detected object 42 is in the center of second field of view 30_2 and is moving to the left.

At time $t_4$, the detected object 42 is in the second overlapping field of view and is therefore in both the second field of view 30_2 and the third field of view 30_3 but is not in the first field of view 30_1. The detected object 42 is in the left of the second field of view 30_2 and is moving to the left. The detected object 42 is in the right of the third field of view 30_3 and is moving to the left.

At time $t_5$, the detected object 42 no longer in the second overlapping field of view and is the third field of view 30_3 but is not in the first field of view 30_1 nor the second field of view 30_2. The detected object 42 is in the center of the third field of view 30_3 and is moving to the left.

The system 100 can generate expected locations 50 for a detected object, e.g. an area of a rectangular (depicted as dashed line) or any other form of an area. There are many different ways to achieve this.

The expected location 50 can, for example, be based upon a spatial locus of uncertainty. A spatial locus of uncertainty represents a volume in space where an object 40 could have moved in the time interval since it was last detected/identified. The spatial locus of uncertainty can be of a fixed size. The spatial locus of the uncertainty can be of a variable size. In some examples, the spatial locus of uncertainty can be of a dynamically variable size. The spatial locus of uncertainty can for example be dependent upon the detection and/or identification of the object. For example, a certain class of objects could have a maximum speed Vd_max, then the locus of uncertainty would be Vd_max multiplied by the time interval. For example, a particular identified object could have a maximum speed Vi_max, then the locus of uncertainty would be Vi_max multiplied by the time interval. The spatial locus of uncertainty can for example be dependent upon velocity rather than speed. In this case each spatial direction can have a different speed and can be assessed independently with different Vd_max or Vi_max for different directions.

The expected location 50 can, for example, be based upon a trajectory. A trajectory represents a location that changes over time. Based on certain assumptions, a future location can be estimated based on a past location. The assumption can be based on a constant velocity assumption or a constant component of velocity assumption. The assumption can be based on a variable velocity assumption or a variable component of velocity assumption. This can be based on calculations using a physics engine to calculate a path of a projectile for example. The assumption can be based on some form of curve matching to past locations or some form of temporal filtering e.g., Kalman filtering.

The expected location 50 can for example be based on a combination of a trajectory and a spatial locus of uncertainty.

In some examples, the expected location and side 50 can be dependent upon any combination of the above-described features.

The expected location 50_1 of the detected object 42 in the first field of view 30_1 moves with the detected object between the times $t_1$ and $t_5$. it moves from left to right between times $t_1$ and $t_3$ and is absent at time $t_4$ and time $t_5$. In this example, it moves a distance dependent upon the speed of the detected object multiplied by the time interval between. The speed of the detected object can be estimated from a distance travelled in a previous time interval, which could for example be the immediately preceding time interval or some other preceding time interval.

The expected location 50_2 of the detected object 42 in the second field of view 30_2 moves with the detected object 42 between times $t_1$ and $t_5$. It moves from right to left between times $t_2$ and $t_3$ and between times $t_3$ and $t_4$. It is absent at time $t_1$ and time $t_5$. In this example, it moves a distance dependent upon the speed of the detected object multiplied by the time interval. The speed of the detected object can be estimated from a distance travelled in a previous time interval in the same field of view 30_2 or in a different field of view field of view 30_1. A transformation may be used to convert a speed in one field of view 30 to another field of view. The transformation can take account of different scaling (zoom) between the fields of view 30 and different points of view of the cameras 10. For example, a velocity $\underline{u}$ ($u_x$, $u_y$) for one camera may appear to be a velocity ($u_x$*cos $\beta$, $u_y$*sin $\beta$) where $_\beta$ is an offset angle between the cameras or $k$*($u_x$*cos $\beta$, $u_y$*sin $\beta$) where $_k$ is a non-unitary scaling factor. This simple 2D transformation can be easily extended into three dimensions.

The expected location 50_3 of the detected object 42 in the third field of view 30_3 moves with the detected object 42 between times $t_1$ and $t_5$. It moves from right to left between times $t_4$ and $t_5$. It is absent at times $t_1$, $t_2$, $t_3$. In this example, it moves a distance dependent upon the speed of the detected object 42 multiplied by a time interval. The speed of the detected object can be estimated from a distance travelled in a previous time interval in the same field of view 30_3 or in a different field of view field of view 30_1 or field of view field of view 30_2. A transformation may be used to convert a speed in one field of view 30 to another field of view. The transformation can take account of different scaling (zoom) between the fields of view 30 and different points of view of the cameras 10. For example, a velocity $\underline{u}$ ($u_x$, $u_y$) for one camera may appear to be a velocity ($u_x$*cos $\beta$, $u_y$*sin $\beta$) where $\beta$ is an offset angle between the cameras or $k$*($u_x$*cos $\beta$, $u_y$*sin $\beta$) where $_k$ is a non-unitary scaling factor. This simples 2D transformation can be easily extended into three dimensions.

In order to determine an expected location 50 of the detected object 42 (if any) in a particular field of view 30 information 60 is fed forward from a detection event to assist a following detection event. For example, a bounding box of a detected object in a first field of view can be specified by diagonal corners (x1, y1) and (x2, y2). If the following detection event is at a different field of view at a different camera, then the bounding box needs to be converted (re-scaled and re-positioned) for the second field of view.

In FIG 4 the first detection event occurs at time $t_1$. The object is detected in the first field of view 30_1 at time $t_1$. The information 60 is fed forward (in time) to assist detection of the detected object 42 at time $t_2$ in the same field of view 30_1 and also in a different field of view 30_2. Knowledge of the expected location 50 (if any) of the object in different fields of view allows for the selective feed forward of information in some examples. For example, because the detected object is moving into the first overlapping field of view 80_1 the information is fed forward for object detection in the first field of view 30_1 and the second field of view 30_2 but not for object detection in the third field of view 30_3. The information 60 that is fed forward 60 can, for example, be determined as a consequence of the detection of the object 42 in the first field of view 30_1 at the first time $t_1$.

The object is detected in the first field of view 30_1 and the second field of view 30_2 at time $t_2$. The information 60 is fed forward (in time) to assist detection of the detected object 42 at time $t_3$ in the same field(s) of view and also in a different field(s) of view. Knowledge of the expected location 50 (if any) of the object in different fields of view allows for the selective feed forward of information 60 in some examples. For example, because the detected object is moving through the first overlapping field of view 80_1 the information 60 is fed forward for object detection in the first field of view 30_1 and the second field of view 30_2 but not for object detection in the third field of view 30_3. The information 60 that is fed forward 60 can, for example, be determined as a consequence of the detection of the object 42 in the first field of view 30_1 at the time $t_2$ and/or the information 60 that is fed forward 60 can, for example, be determined as a consequence of the detection of the object 42 in the second field of view 30_2 at the time $t_2$.

The object is detected in the first field of view 30_1 and the second field of view 30_2 at time $t_3$. The information 60 is fed forward (in time) to assist detection of the detected object 42 at time $t_4$ in different fields of view 30_2, 30_3. Knowledge of the expected location 50 (if any) of the detected object 42 in different fields of view 30 allows for the selective feed forward of information 60 in some examples. For example, because the detected object 42 is moving out of the first field of view 30_1 and into the second overlapping field of view 80_2 the information 60 is fed forward for object detection in the second field of view 30_2 and the third field of view 30_3 but not for object detection in the first field of view 30_1. The information 60 that is fed forward 60 can, for example, be determined as a consequence of the detection of the object 42 in the first field of view 30_1 at the time $t_3$ and/or the information 60 that is fed forward 60 can, for example, be determined as a consequence of the detection of the object 42 in the second field of view 30_2 at the time $t_3$.

The object is detected in the second field of view 30_2 and the third field of view 30_3 at time $t_4$. The information 60 is fed forward (in time) to assist detection of the detected object 42 at time $t_5$ in the field of view 30_3. Knowledge of the expected location 50 (if any) of the detected object 42 in different fields of view 30 allows for the selective feed forward of information 60 in some examples. For example, because the detected object 42 is moving out of the second field of view 30_1 and out of the second overlapping field of view 80_2 the information 60 is fed forward for object detection in the third field of view 30_3 but not for object detection in the first field of view 30_1 nor the second field of view 30_2. The information 60 that is fed forward 60 can, for example, be determined as a consequence of the detection of the object 42 in the second field of view 30_2 at the time $t_4$ and/or the information 60 that is fed forward 60 can, for example, be determined as a consequence of the detection of the object 42 in the third field of view 30_3 at the time $t_4$.

The information 60 can be used to aid detection of an object 42. It can for example, identify an attribute of the detected object that is used to detect the object. For example, an attribute of a class of detected object 42 that is used in a class detection algorithm. For example, an attribute could be a color, texture, size or other information that can be used for partial disambiguation during detection. It can for example, identify a location of the detected object 42 in a previous field of view 30 or an expected location of the detected object 42 in a next field of view 30. It can for example, identify a size of the detected object 42 in a previous field of view 30 or an expected size of the detected object 42 in a next field of view 30. It can for example, identify a speed or velocity or components of velocity of the detected object 42 in a previous field of view 30 or an expected speed or velocity or components of velocity of the detected object 42 in a next field of view 30. It can for example provide information used to estimate a spatial locus of uncertainty of the detected object 42 in the next field of view 30 (whether for the same or a different camera) or to determine a trajectory of the detected object 42 (whether for the same or a different camera). In some examples, the information 60 can identify any combination of the attributes as described above.

In the examples illustrated in FIG 4, the expected location 50 of the detected object is illustrated using a bounding box illustrated using dotted lines. The position of the bounding box changes with the expected position of the detected object 42 in the respective field of view 30. This can, for example, depend on a detected object's trajectory. The size of the bounding box can be constant or can change with an expected size of the detected object in the respective field of view. This can, for example, depend on a spatial locus of uncertainty for the detected object 42. As previously described, this may depend on perspective (camera orientation), scaling factors, camera location etc and some of all of these can be communicated in at least some examples. In other examples, the position of the cameras 10 is fixed and the position would not need to be included in information 60. In some of these examples or other examples, the orientation (tilt, pan) of the cameras 10 is fixed and orientation would not need to be included in information 60. In some of these examples or other examples, the zoom (scaling) of the cameras 10 is fixed and scaling/zoom values would not need to be included in information 60. Thus, the cameras 10 can have fixed fields of view 30. In some other examples, the cameras 10 can have dynamically changing perspectives, orientation, fields of view, scaling factors, camera locations, or any combination of thereof.

The cameras 10 can be in any suitable location. They can for example be traffic cameras, a surveillance system in a retail store, transport hub, or public area, a security system, or some other identification and tracking system.

As previously described the system 100 identifies a detected object once at time $t_1$ and then tracks that detected (and identified) object 42 across time and across fields of view 30.

The object 40 can be identified in the information 60 fed forward from the previous identification event.

The system 100 comprises identification means 20 for identifying an object 40 captured by one or more of the multiple cameras 10_i, wherein the identification means 20 comprises means for:

> using visual feature matching for a detected object 42 in a first field of view 30_1 of a first camera 10_1 to identify the detected object 42 in the first field of view 30_1 of the first camera 10_1 as a first object 40;
> using an expected location 50_2 of the first object 40 in the second field of view 30_2 of the second camera 10_2 to identify a detected object 42 in the second field of view 30_2 as the first object 40; and, optionally,
> using an expected location 50_2 (if any) of the first object 40 in the third field of view 30_3 of the third camera 10_3 to identify a detected object 42 in the third field of view 30_3 as the first object 40.

In FIG 4, the first field of view 30_1, the second field of view 30_2 and the third field of view 30_3 are illustrated as being synchronized and simultaneous, that is at the same times $t_1$, $t_2$, $t_3$, $t_4$, $t_5$. However, in some examples the first field of view 30_1, the second field of view 30_2 and the third field of view 30_3 that are illustrated as being simultaneous at any one or more of the times $t_1$, $t_2$, $t_3$, $t_4$, $t_5$ can be contemporaneous, which means that they are spread over a time range. In some examples the first field of view 30_1, the second field of view 30_2 and the third field of view 30_3 that are illustrated as being simultaneous at any one or more of the times $t_1$, $t_2$, $t_3$, $t_4$, $t_5$ can be not simultaneous and not contemporaneous. The requirement is that there is a valid expected location for the detected object 42 in the respective field of view.

The system 100 can, for example, be configured to determine the expected location 50 of the object 42 (detected in the first field of view 30_1) in a field of view 30_i of another camera 10_i. The other field of view 30_i being constrained to be simultaneous with or contemporaneous with the first field of view 30_1 of the first camera 10_1 or being constrained to directly follow in time (that is within a threshold time) the first field of view 30_1 of the first camera 10_1 or is constrained to have a temporal relationship with the first field of view 30_1 of the first camera 10_1 that maintains a calculated uncertainty in the expected location below a threshold level.

The calculated uncertainty can for example be based on a size of the spatial locus of uncertainty. The threshold time can for example be a frame interval, i.e., 100ms in case of 10 frames per second, or 33ms in case of 30 frames per second or some multiple of a frame interval.

The system 100 illustrated therefore comprises means for:

identifying a detected object 42 in the first field of view 30_1, outside the overlapping field of view, as the first object 40;

detecting when the detected object 42, identified as the first object 40, in the first field of view 30_1 enters the first overlapping field of view 80_1, and consequently identifying a corresponding detected object 42 in the second field of view 30_2, inside the first overlapping field of view, as the first object 40;

detecting when the detected object 42, identified as the first object 40, in the second field of view 30_2 enters the second overlapping field of view 80_2, and consequently identifying a corresponding detected object 42 in the third field of view 30_3, inside the second overlapping field of view 80_2, as the first object 40.

The identification process performed at visual-feature-matching identification block 22 is computationally intensive. The system 100 avoids performing this process by performing visual feature match initially using visual-feature-matching identification block 22 and thereafter tracking the detected object across the fields of view 30 of different cameras 10 and using the correspondence of an expected location of the detected object 42 to a location of an object subsequently detected in a field of view of a camera to identify the object detected as the originally identified object. The identity of the detected object is fed forward from the original field of view 30 on which the visual feature matching occurs to subsequent fields of view without the need to perform visual feature matching, there is only a need to perform the computationally less intensive detection process and to feed forward information 60.

The information 60 that is fed forward can therefore identify the detected object 42.

Although the initial visual feature matching performed at visual-feature-matching identification block 22 is now preferably only performed once per tracked object at the start, it is still computationally heavy. It is also desirable to decrease the computational load when the initial visual feature matching is performed at visual-feature-matching identification block 22. The computational load can be shared among multiple cameras 10.

It is also desirable to increase the probability that when the initial visual feature matching is performed at visual-feature-matching identification block 22 it is performed in a manner that maximizes the likelihood that the identification will be successful.

The system 100 can be configured to create a sequence of cameras 10 and perform visual feature matching for the target object 40 in the fields of view 30 of the cameras 10 in the sequence in the order of the sequence to identify the target object 40 in one or more field of view of the cameras 10_i in the sequence.

The order of cameras in the sequence can depend upon the number of bounding boxes and total size of bounding boxes in the cameras' fields of view at the time of interest.

The system 100 can also be configured to create a sequence of detected objects 42 and perform visual feature matching for the target object 40 for the detected objects 42 in the sequence in the order of the sequence to identify the target object 40. The order of analysis of the bounding boxes can be controlled so that the most likely to be successful bounding box is analyzed first, and this is based on temporal processing and likely movement of the object and/or based on expected quality of the image of the object.

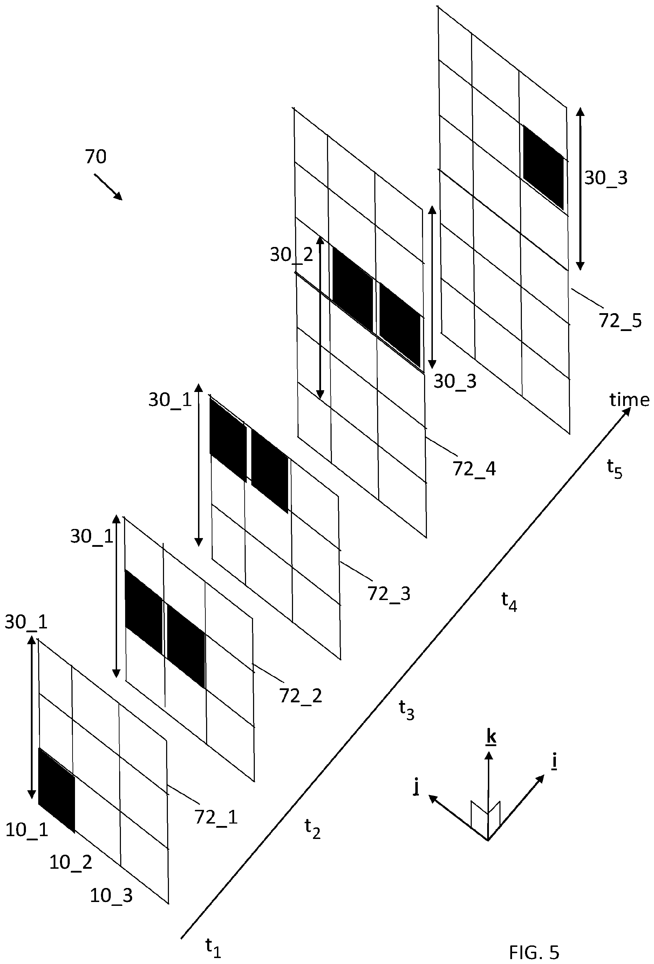

FIG 5 illustrates an example of a camera-spatial-temporal mapping 70 that can used by the system 100 in some, but not necessarily all examples.

In this example but not necessarily all examples, the likelihood camera-spatial-temporal mapping 70 is modelled using three orthogonal vectors j, k, i. The vector j spans the camera space and has a different value for different cameras. The vector k is used to span real space and has a different value for different locations. The vector i is used to span time and has a different value for different times. The vectors are orthogonal $j \wedge k = i$.

FIG 5 shows time slices 72_i of the mapping 70 in a temporal dimension (i). Each time slice 72_i is for a time $t_i$. Each time slice 72_i has a camera dimension parallel to j and a spatial dimension parallel to k.

The spatial dimension (parallel to k) of each time slice 72_i is divided into spatial sub-portions. For example, there are three spatial sub portions illustrated for times $t_1$, $t_2$ and for $t_3$ and there are six spatial sub-portions illustrated for times $t_4$ and $t_5$. Each spatial sub-portion represents a different location in real space. In this example, neighboring spatial sub-portions represent neighboring locations in real space.

The camera dimension (parallel to j) of each time slice 72_i is divided into camera sub-portions. For example, there are three camera sub portions illustrated for times $t_1$, $t_2$, $t_3$, $t_4$ and $t_5$. Each camera sub-portion represents a different camera 10_1, 10_2, 10_3.

Therefore, time slice 72_i has sub-areas uniquely identified by a coordinate reference (j, k) where j identifies a camera (a camera sub-portion) and k identifies a location (a spatial sub-portion)

The fields of view 30_i of the camera 10_i are illustrated on the spatial dimension(k). The field of view 30_1 of the camera 10_1 maps to areas (1,1), (1, 2), (1,3) of the time slices 72_i. It is labelled at times $t_1$, $t_2$, $t_3$. The field of view 30_2 of the camera 10_2 maps to areas (2,2), (2, 3), (2,4) of the time slices 72_i. It is labelled at times $t_4$. The field of view 30_3 of the camera 10_3 maps to areas (3,4), (3, 5), (3,6) of the time slices 72_i. It is labelled at times $t_4$ and $t_5$.

A portion of a field of view 30_i of a camera 10_i can overlap in the spatial dimension (same k value) with a portion of a different field of view 30_j of a camera 10_j.

The field of view 30_1 of the camera 10_1 [(1,1), (1, 2), (1,3)] overlaps the field of view 30_2 of the camera 10_2 [ (2,2), (2, 3), (2,4)] at k=2 & k=3. The field of view 30_2 of the camera 10_2 [ (2,2), (2, 3), (2,4)] overlaps the field of view 30_3 of the camera 10_3 [ (3,4), (3, 5), (3,6)] at k=4.

Referring to FIGs 3, 4 & 5, the first field of view 30_1 partially overlaps the second field of view 30_2 at a first overlapping field of view (identified by k=2 & k=3 in FIG 5). The third camera 10_3 in the multiple camera system 100 has a third field of view 30_3 that partially overlaps the second field of view 30_2 at a second overlapping field of view (k=4 in FIG 5), but does not overlap the first overlapping field of view (k=2, 3 in FIG 5).

The progression of the object 42 in FIG 4 is shown in the mapping 70 using the black squares. At time $t_1$ the object 42 at location k=1 is within the field of view 30_1 of the camera 10_1 as indicated by the black square at (1,1) but is not within the fields of view 30_2, 30_3 of the cameras 10_2, 10_3 as indicated by the white square at (2,1) and (3,1).

At time $t_2$ the object 42 at location k=2 is within the field of view 30_1 of the camera 10_1 as indicated by the black square at (1,2) and is within the field of view 30_2 of the camera 10_2 as indicated by the black square at (2,2) but is not within the field of view 30_3 of the camera 10_3 as indicated by the white square at (3,2).

At time $t_3$ the object 42 at location k=3 is within the view 30 field of view 30_1 of the camera 10_1 as indicated by the black square at (1,3) and is within the field of view 30_2 of the camera 10_2 as indicated by the black square at (2,3) but is not within the field of view 30_3 of the camera 10_3 as indicated by the white square at (3,3).

At time $t_4$ the object 42 at location k=4 is within the view 30 field of view 30_2 of the camera 10_2 as indicated by the black square at (2,4) and is within the field of view 30_3 of the camera 10_3 as indicated by the black square at (3,4) but is not within the field of view 30_1 of the camera 10_1 as indicated by the white square at (1,4).

At time $t_5$ the object 42 at location k=4 is within the view 30 field of view 30_3 of the camera 10_3 as indicated by the black square at (3,5) but is not within the field of view 30_2 of the camera 10_2 as indicated by the white square at (2,5) and is not within the field of view 30_1 of the camera 10_1 as indicated by the white square at (1,5).

The system 100 identifies a detected object 42 in the first field of view 30_1, outside the first overlapping field of view, as the first object 40. The system 100 detects when the detected object 42, identified as the first object 40, in the first field of view 30_1 enters the first overlapping field of view, and consequently identifies a corresponding detected object 42 in the second field of view 30_2, inside the first overlapping field of view, as the first object 40. The system 100 detects when the detected object 42, identified as the first object 40, in the second field of view 30_2 enters the second overlapping field of view, and consequently identifies a corresponding detected object 42 in the third field of view 30_3, inside the second overlapping field of view, as the first object 40.

The spatial-temporal mapping 70 maps the fields of view 30 of the multiple cameras 10 to a common time and space where overlapping fields of view 30 share the same time and space. An important aspect for leveraging the spatial and temporal association created by the mapping, is to match the bounding box of a detected object 42 with the other bounding boxes in the mapping (for the current expected position of the object) and in the previous field of view (for the previous actual position of the object).

From the foregoing, it will be understood, that in at least some examples, a camera 10_i comprises means for providing to other ones of the multiple cameras 10 an indication of a location of the detected object 42 in the field of view 30_i of the camera 10_i and an indication of the identity of the detected object 42. In some examples, the indication of the location of the detected object 42 in the field of view 30_i of the camera 10_i is provided as an indication of a bounding box location, for example two co-ordinates that specify diagonal corners of a rectangle. In some examples, the indication of the location of the detected object 42 in the field of view 30_i of the camera 10_i is provided to a selected sub-set of the multiple cameras 10 based on the location of the detected object 42 in the field of view 30_i of that camera 10_i and a spatial relationship of fields of view 30 associated with the multiple cameras 10_i. The sub-set can be determined by identifying the fields of view 30 that contain the expected location of the detected object 42. The sub-set can be determined by identifying the overlapping fields of view 80 that contain the expected location 50 of the detected object 42. The expected location 50 of the detected object 42 lies within the fields of view of the cameras 10 in the sub-set and the expected location 50 of the detected object 42 lies outside the fields of view 30 of the cameras 10 not in the first sub-set.

In the foregoing description various features have been described as being performed by the system 100 and 70. All or some of these features can be performed by a single camera in communication with other cameras 10 or by a combination of cameras 10.

In at least some examples, one, some or all of the cameras 10 of the multi-camera system 100 and 70 comprises identification means 20 for identifying an object 40 captured by the multiple camera system 100, wherein the identification means 20 comprises means for: using visual feature matching for a detected object 42 in a field of view of the camera to identify the detected object 42 in the field of view of the camera as a first object 40; and using an expected location 50 of the first object 40 in a second field of view 30_2 of a second camera 10_2 to identify a detected object 42 in the second field of view 30_2 as the first object 40, wherein the second camera 10_2 is different to the camera and the second field of view 30_2 is different to the field of view.

In at least some other examples, one of an apparatus 10, such as the cameras 10 of the multi-camera system 100 and 70, comprises identification means 20 for identifying an object 40 captured by the apparatus 10_1, wherein the identification means 20 comprises means for:

using visual feature matching for a detected object 42 in a field of view of the apparatus to identify the detected object 42 in the field of view of the apparatus as a first object 40; and
using an expected location 50 of the first object 40 in a second field of view 30_2 of a second apparatus 10_2 to identify a detected object 42, received from a second apparatus 10_2, in the second field of view 30_2 as the first object 40,
wherein the second apparatus 10_2 is different to the apparatus 10_1 and the second field of view 30_2 is different to the field of view 30_1.

There follows a more detailed implementation example of the system 100. The system 100 is capable of simultaneously identifying multiple target objects 40 across multiple different but partially overlapping fields of view 30 of respective cameras 10.

The system 100 supports cross-camera collaboration on smart cameras 10 without relying on a cloud server, while providing robust, low-latency, and private video analytics.

When a query image is given, the system 100 detects a target object 40 with the query identity from video streams captured by multiple cameras 10. The system can also manage/process multiple query images concurrently.

The system performs multi-target multi-camera tracking. Target tracking is a primitive task for the collaboration of the cameras 10.

In some examples, the multi-target multi-camera tracking is separated from analytics applications.

A video analytics service, which can run, e.g. on a camera 10, can receive from a user of the system 100, from an external process and/or from any camera 10_i one or more query images, and can further provide the one or more query images as input to the system 100 and take charge of the system 100 underlying operations for cross-camera collaboration. Examples of the video analysis services include object counting in overlapping fields of view 30, localizing objects by generating and comparing tracklets, and information retrieval such as license plate recognition and face detection. Thus, analytics developers can focus on the analytics logic without being concerned about camera topology, resource interference with other analytics services, implementation of complex, distributed algorithms or analytics-irrelevant runtime issues.

The system 100 takes one or more query images as input from a user of the system 100 and/or from an external process, such an analytics application, and provides the information about the object 40 with the query identity when it is captured by any camera 10 in the camera network. More specifically, the system 100 provides a list of cropped images and bounding boxes of the detected objects 42 obtained from all cameras 10 where the object 40 appears. Based on this information, the application can further process various analytics, e.g., localizing, counting, image fusion, etc. Note that the system 100 supports multiple queries to support multi-target tracking of an application or multiple applications concurrently as well.

The system 100 can therefore provide higher quality video analytics and benefits from on-camera analytics. Video analytics on a camera 10 offers various attractive benefits compared to traditional cloud-based analytics, such as immediate response, enhanced reliability, increased privacy, efficient use of network bandwidth, and reduction of monetary cost.

The system 100 aims at achieving low latency and high throughput video processing, which are the key requirements from video analytics applications

In the following use cases, imagine a geographical area, such as a crossroad, where a number of cameras 10 are deployed to monitor objects on the area, such as vehicles on the road. While a target vehicle is captured by multiple cameras 10, the quality of the cropped image and pointing direction of the target vehicle would vary due to different relative distance and angle between the vehicle and the camera. Also, a vehicle can be occluded by another vehicle from one camera's view, but not other cameras 10' view.

The systems 100 uses spatial/temporal mappings for multi-target multi-camera tracking optimization that avoids unnecessary and redundant re-identification (re-id) operations by leveraging the spatial and temporal relationship of target objects across deployed cameras 10. More specifically, the system 100 associates the identity of an object 40 across multiple cameras 10 by matching the pre-mapped expected locations of an identified object to a location of a detected object 40 in the frame (the field of view 30), rather than matching the features extracted from a re-identification (re-id) model.

Once cameras 10 are installed in a place, their fields of view 30 can be fixed over time. Thus, for any object 40 located in the same physical place, the position of the corresponding bounding box from the object 40 detection model would remain the same. If the bounding box of two objects (at different times) are located in the same position in a frame (field of view 30) of a camera 10, the position of their bounding boxes in other cameras 10 would also remain the same - this is spatial association.

An object 40, that has a location, remains in proximity to that location within consecutive frames - this is temporal association.

The spatial/temporal association is used to achieve efficient multi-camera re-identification while avoiding repetitively performing the re-id model.

If an object 40 matching the query is found in camera 10_1 and the expected position of its bounding boxes in camera 10_2 can be obtained, the system 100 can determine the identity of an object 40 in the field of view 30_2 of camera 10_2 by matching the expected position, without executing the re-id model. If no bounding box corresponding to the bounding box in the camera 10_1 is expected to exist, e.g., in camera 10_3, the system 100 skips all the operations in the camera 10_3 because it means that the object 40 is located out of the camera 10_3 field of view 30_3.

let:

C: a set of cameras 10_i, where C' is $i^{th}$ camera,

$F_t$: a set of image frames at time t, where $F_t^i$ is an image frame (field of view 30) from $C^i$ at time t,

$E_Q$: a set of re-id feature embeddings of query images, where Ej is the feature embedding of $j^{th}$ query.

Spatial association: We first explain how the system 100 defines the spatial association across multiple cameras 10. Once an object 40 with the same identity is captured in multiple cameras 10, the system 100 creates a mapping entry that contains a timestamp and a list of the corresponding bounding boxes on each camera in C. Formally, we define a mapping entry as $entry_j = \{entry\_bbox_j^i\}$, where $entry\_bbox_j^i$ is a coordinate pair referring to the southwestern and northeastern corner of the box in $C^i$ at $j^{th}$ mapping entry. $entry\_bbox_j^i$ is set as N/A if the object 40 is not found in the corresponding camera, $C^i$.

The system 100 uses bounding boxes as a location identifier for fine-grained matching the spatial association. The system 100 maintains the entries as a hash table for quick access. If the number of entries becomes too high, the system 100 filters out duplicate (or very closely located) entries. These mapping entries can be obtained at the offline phase with pre-recorded video clips or updated at the online phase with the runtime results. These mappings are shared across cameras 10.

Multi-camera re-identification: The system 100 for multi-camera re-identification works as follow. For simplicity, we explain the procedure for a single query.

0. The system 100 receives a query label from a user or selected by the user of the system, e.g. a re-id of a target object. Alternatively or additionally, the query label can be received after step 2 (below).

1. Camera order determination: The system 100 determines the order of cameras 10 to inspect and repeats the below operations for each camera.

2. Object 40 detection: For an image frame (field of view 30_i) from a given camera, $C^i$, the system 100 performs the object detection. The system 100 defines its output as $\{bbox_{t,j}^i, label_{t,j}^i\}$, where $bbox_{t,j}^i$ and $label_{t,j}^i$ are a bounding box and a label for $j^{th}$ object on $C^i$ at time t, respectively.

The system 100 detects objects (or target objects) in the multiple different fields of view 30 of the multiple different cameras 10. In this example, the system 100 detects bounding boxes of objects in a field of view 30 by using object detection models (e.g., convolutional neural networks (CNN)) such as You Only Look Once (YOLO), or background subtraction techniques.

Several techniques have been proposed for object detection, for example, extracting a region of interest (i.e., a bounding box of an object) from an image. One way is to spot moving objects in a video sequence by leveraging the background subtraction. Another way is to use some of object detection models, such as CNN models. While background subtraction is lightweight, an object detection model can effectively reduce the number of regions of interest to inspect by matching the corresponding labels with the query object class, e.g., vehicles. The system developer can flexibly adopt different region of interest detection methods on the system 100, e.g., based on the processing capacity of smart cameras 10 and the system policy.

Alternatively or additionally to the step 0, the system 100 can receive a query label from a user or an object selection (i.e. a query label) from the one or more detected objects by the user of the system.

3. Re-id feature extraction: For the results of which label matches the query label, the system 100 determines the order of bounding boxes to inspect. Object detection model results include object labels. For objects with a label that matches the query label, the system 100 sorts the bounding boxes for inspection. For each cropped image (bounding box) with a particular type, the system 100 executes the re-id model and obtains the re-id features, $\{E_{t,j}^i\}$, where $E_{t,j}^i$ is the re-id feature from the cropped image ($\text{bbox}_{t,j}^i$). The system 100 can further reduce the re-id model operations within a camera by leveraging the temporal locality of an object 40.

4. Re-id-based identity matching: For each detected object, the system 100 computes its similarity to the query image by comparing the extracted features, $E_q$, and determine its identity. In this example, the system 100 can use models (e.g., convolutional neural networks (CNN) such as ResNet-101/50. Steps 3 & 4 are repeated until the target object 40 is found.

Thus, the system 100 extracts the re-id features of the detected objects by running the re-id model and determines the query identity (i.e., whether to match the query image) based on the similarity of features.
It is normal practice to train the object type-specific re-id models such as person re-id model or vehicle re-id model and establish correspondences by measuring the similarity between re-id feature vectors of (cropped) images, e.g., from Euclidean distance or cosine similarity. To this end, the system 100 can be configured to use the dataset-specific re-id models and similarity functions.

5. Expected location-based identity matching: The system 100 constructs a set of bounding boxes of the target object 40 from previously inspected cameras 10 including the current camera, $C^i$, i.e., $\{\text{entry\_bbox}_{t,j}^k \mid k \in K\}$, where K is a set of inspected cameras 10. The bounding boxes represent expected locations of the query object j at time t within the fields of view 40_k of the cameras k in the set K.

The set may contain one or more N/A elements, which shows that the object 40 is expected to be located in non-(or not sufficiently) overlapping fields of view 30.

The system 100 looks up the mapping entry that matches $\{\text{entry\_bbox}_{t,j}^k\}$ for the camera set, K. If the entry is found, then the system 100 extracts the spatially associated bounding boxes of other cameras 10 (that are not inspected yet) in the entry, i.e., $\{\text{entry\_bbox}_j^i \mid i \notin K\}$. The spatially associated bounding boxes of other cameras 10 are at the expected location of the query object j.

6. If the bounding box in other camera exists in the entry, e.g., $\text{entry\_bbox}_{t,j}^{i+1}$, the system 100 performs the object detection in the corresponding camera, $C^{i+1}$ and determines the query identity of an object 40 by spotting the bounding box that matches $\text{entry\_bbox}_{t,j}^{i+1}$. If the entry has N/A in other cameras 10, e.g., $C^{i+1}$, the system 100 skips all the operations of $C^{i+1}$ at time t.

A key to leveraging the spatial and temporal association is to match the bounding box of a detected object 40 with the other bounding boxes in the mapping entry and in the previous frame, respectively. In some but not necessarily all examples, the system 100 is configured to use the intersection-over-union (IOU) to measure the distance between two bounding boxes and determine that two bounding boxes match if their IOU exceeds an 'overlap' threshold, for example 0.5.
If a target object 40 is not found in the frame (field of view 30), the system 100 sets $\text{entry\_bbox}_t^i$ as N/A and does step 5.

7. Step 1--6 are repeated until all cameras 10 are inspected.

In the case when multiple queries are given, the output from object 40 detection (1) and re-id feature extractions (2) is shared, but only re-id and mapping-based identity matching ((3) and (4)) are performed separately.
The benefit arising from the spatial association is finding the objects matching the query quickly, thereby (a) avoiding the re-id operations on other cameras 10 from the spatial association and (b) avoiding the re-id operations of query-irrelevant objects even on the same camera.
The following describes a method for dynamically arranging the order of cameras 10 and bounding boxes to inspect.
Although an object 40 is captured by multiple cameras 10 simultaneously, the quality of the corresponding image largely varies and the single-camera re-identification can fail to determine the identity if a cropped image is too small. Overlapping cameras 10 offer an opportunity to rectify such errors by leveraging the spatial association.
Arranging camera order: The order of inspecting cameras 10_i can impact the benefit of the spatial association. For example, consider an example situation where a target object 40 is captured in camera 10_1 and 10_2, but not in camera10_3. Under the assumption that all the cameras 10_i capture the same number of objects, e.g., four vehicles, the system 100 can skip the re-id operations for camera 10_2 and 10_3 if the camera 10_1 is first inspected, i.e., within four executions of the re-id model for the vehicles. In the similar manner the system 100 can skip the re-id operations for the camera 10_1 and 10_3 if the camera 10_22 is first inspected. However, if the inspection starts from the camera 10_3 it will fail and the system 100 will need to further inspect the camera 10_1 or the camera 10_2 just in case the target object 40 is located out of the camera 10_3 field of view.

In addition to the efficiency, the system 100 further considers the quality of the re-identification. Since our approach relies on the re-id-based identity matching on only one camera (for each query), its output quality is important. It is therefore desirable, having decide not to inspect camera 10_3 to decide whether to inspect camera 10_1 or camera 10_2 first. It is desirable to inspect first the camera that gives the greatest likelihood of successful re-id, for example, based on the most number of target/captured objects in a camera 10_i.

To maximize the quality of the re-identification, the system 100 can be further configured to use the (expected) size of the bounding box of the target object to select between candidate cameras 10. That is, the system 100 is configured to consider, for example, camera 10_2 as the first camera to inspect, i.e., where re-id-based identity matching is performed, when its bounding box for the query object is larger than camera 10_1 or 10_3 bounding boxes for the query object.

In some but not necessarily all examples, considering these two factors, the number of the target objects and the size of the bounding box, at each time t, the system 100 is configured to arrange the order of cameras 10 by sorting

$$\alpha \times \frac{N_{t-1}^i}{N_Q} + (1 - \alpha) \times \sum_j^{N_{t-1}^i} c \times \text{size}\left(\text{bbox}_{t-1,j}^i\right)$$

for each camera, $C^i$ in a descending order, where $N_{t-1}^i$ is the number of target objects found in $C^i$ at time t-1, $N_Q$ is the number of queries, size() is a function that returns the size of the given bounding box, c is a coefficient to normalize the size. $\alpha$ is a weight variable that determines the weight of the resource efficiency and re-identification accuracy. The order in the sequence is determined by the number of bounding boxes $N_{t-1}^i$ in a field of view i and the cumulative size of the bounding boxes in that field of view.

After the object 40 detection in a field of view 30 of a camera 10, the order of objects to inspect also impacts the overall performance of the re-identification. It would be beneficial to start inspecting the expected target object, rather than start inspecting the query-irrelevant objects. Therefore, in some examples, the system 100 is configured to arrange the order of bounding boxes to inspect by leveraging the temporal association by starting with nearest neighbor boundary boxes.

In some but not necessarily all examples, the system 100 is configured to sort $\text{min\_dist}\left(\text{bbox}_{t,j}^i, B_{t-1}^i\right)$ per query or

sort $\sum_j \text{min\_dist}\left(\text{bbox}_{t,j}^i, B_{t-1}^i\right)$ for multiple queries,

for each bounding box $\text{bbox}_{t,j}^i$ in $C^i$ at time t in an ascending order, where $B_{t-1}^i$ is a set of bounding boxes of the target objects detected in $C^i$ at time t-1 and min_dist(bbox, B) is a function that returns the minimum distance between bbox any box bounding box in B. Note that it only determines the order of bounding boxes to inspect, not the identity.

In some but not necessarily all examples, the system 100 is configured to leverage temporal association to further reduce the number of re-id operations. The location of an object 40 does not change much within a short period of time. That is, the bounding box of an object 40 in a video stream would also remain in proximity to the bounding box with the same identity in the previous frame. The distance of a vehicle moving with a speed of 60 km/h in consecutive frames from a video stream at 10 Hz is around 1.7 meters, which would be relatively short compared to the size of the area that a security camera usually covers. When the re-id feature extraction is performed, the system 100 caches the re-id features with its bounding box. Then, when the re-id feature is needed for a new bounding box in the later frame, it finds the matching bounding box in the cache. If the matching bounding box is found, the system 100 reuses its re-id features and updates the bounding box of the cache. In the current implementation, the system 100 is configured to set the expiration time to one frame, i.e., the cache expires in the next frame (field of view 30) unless it is updated.

Handling objects that newly appear in the frame: One practical issue when applying the spatial association is how to handle objects when they first appear in a field of view 30.

At time t, a target object, such as a vehicle, is detected only in camera 10_1 (e.g. in close position) and camera 10_2 (far away position), thus the mapping entry is made as $\{\text{bbox}_{t,j}^1, \text{N/A}, \text{bbox}_{t,j'}^{32}\}$ where $\text{bbox}_{t,j}^1$ is larger than $\text{bbox}_{t,j'}^{32}$

At time t+1, the target vehicle starts to appear in camera 10-3 (far away position). The vehicle is detected in the camera 10_1 (close), camera 10_2 (far away) and camera 10_3 (far away).

In some examples, the system 100 is configured to skip mapping-based identity matching for objects that first appear in the frame (field of view), i.e., the system 100 is configured to perform the re-id feature extraction for the detected object when it first enters the field of view of the camera 10_2 and match its identity based on the re-id feature matching. Note that the system 100 is configured to apply for the matching-based identity matching for other cameras 10 (e.g., camera 10_3).

To effectively identify objects when they first appear without identity matching, in some examples, the system 100 is configured to use a simple and effective heuristic method. Inspired by the observation that an object 40 appears in the camera's frame (field of view 30) by moving from out-of-frame to in-frame, the system 100 is configured to consider the bounding boxes that are newly located at the edge of the frame (field of view 30) as potential candidates and perform the re-id feature extraction regardless of matching mapping entry if no corresponding cache is found.

A key challenge for the system 100 is a long execution time. While the system 100 significantly reduces the total number of re-id feature extractions required for identity matching, its end-to-end execution time can increase if the target objects are not found in the previously inspected cameras 10, due to the sequential execution of the inspection operations. To optimize the end-to-end execution time, in some but not necessarily all examples, the system 100 is configured to apply the following techniques that exploit the resources of distributed cameras 10.

> 1. For a given a new image frame (field of view 30), the system 100 is configured to perform spatial association-irrelevant tasks on cameras 10_i in parallel, i.e., object 40 detection and re-id feature extraction of newly appeared objects at the edges of the frame.

> 2. When the number of bounding boxes to extract the re-id features in a frame (field of view 30) exceeds the pre-defined batch size, the system 100 is configured to distribute the re-id workloads into nearby cameras 10_i and execute them in parallel. Such distribution is beneficial to the end-to-end execution time because 1) the current AI (artificial intelligence) accelerators do not support parallel execution of deep learning models and 2) the network latency is relatively much shorter because the system 100 is configured to send only the cropped image, not the full-frame image.

Note that batch processing is also a widely used way to decrease the execution time for multiple inferences. To maximize the benefit from the workload distribution and batch processing, the system 100 is configured to profile the execution time with various batch sizes on each camera and network latency with data transmission sizes. Then, the system 100 is configured to dynamically select the optimal batch size to process in a camera 10_i and the optimal number of bounding boxes to distribute to other cameras 10_i.

Formally, the system 100 can be configured to define this problem as follows. When there are N bounding boxes to extract the re-id features on a camera and there are K other cameras 10_i, the system 100 is configured to define the total execution time as follows:

$$\sum_{i}^{K} TD(n_i) + BP(n_i)$$

where $n_i$ is the number of bounding boxes to extract the re-id features on C', $TD(n_i)$ is a function that returns the transmission latency to transmit $n_i$ cropped images, and $BP(n_i)$ is a function that returns the execution time of the re-id model with batch size of $n_i$; $TD()$ returns zero if $C^i$ is the camera being inspected. Then, the system 100 is configured to find $\{n_i\}$ that minimizes the total execution time, while $\Sigma\, n_i = N$.

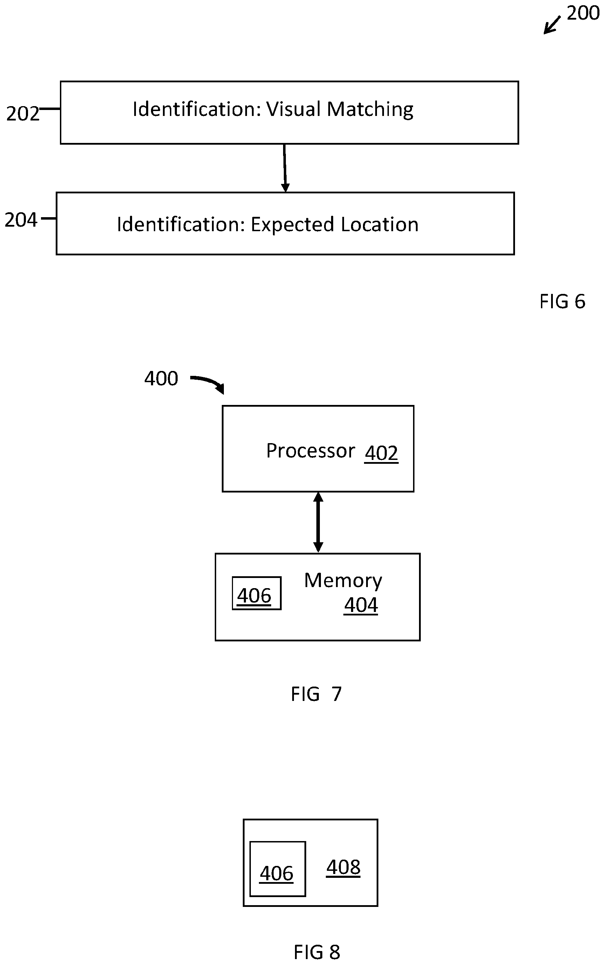

FIG 6 illustrates a method 200 comprising:

> at block 202, using visual feature matching for a detected object 42 in a first field of view 30_1 of a first camera 10_1 to identify the detected object 42 in the first field of view 30_1 of the first camera 10_1 as a first object 40; and
> at block 204, using an expected location 50 of the first object 40 in a second field of view 30_2 of a second camera 10_2 to identify a detected object 42 in the second field of view 30_2 as the first object 40, wherein the second camera 10_2 is different to the first camera 10_1 and the second field of view 30_2 is different to the first field of view 30_1.

Fig 7 illustrates means, for example, of a controller 400, for use in a host which can be the system 100, an apparatus 10 and/or a camera 10. In some examples, each apparatus or camera 10_i comprises a controller 400 and one or more camera sensors or image sensors. In some examples, the one or more camera or image sensor maybe a LIDAR (Light Detection and Ranging) sensor and/or IR (infrared) sensors.

In some example implementation, the system 100 can be implemented in a vehicle, wherein the vehicle has multiple cameras 10_i with at least partly different field of views 30_i. The vehicle can be stationary, but the system 100 also functions in a moving vehicle.

In some other example implementation, the system 100 can be implemented in any indoor and/or outdoor environment, or a combination, wherein the environment has multiple cameras 10_i with at least partly different field of views 30_i.

In some example implementations, the apparatus 10 can be a smart phone, a mobile communication device, a game controller, an AR (augmented reality) device, a MR (mixed reality) device, a VR (virtual reality) device, a security camera, a CCTV (closed-circuit television) device, or any combination thereof.

In some example implementations, the system 100 can comprise one or more apparatus 10, such as a smart phone, a mobile communication device, a game controller, an AR (augmented reality) device, a MR (mixed reality) device, a VR (virtual reality) device, a security camera, a CCTV (closed-circuit television) device, or any combination thereof.

Implementation of a controller 400 may be by means, for example, as controller circuitry. The controller 400 may be implemented by various means, for example, in hardware alone, have certain aspects in software including firmware alone or can be a combination of hardware and software (including firmware).

As illustrated in Fig 7 the controller 400 may be implemented using instructions that enable hardware functionality, for example, by using executable instructions of a computer program 406 in one or more general-purpose or special-purpose processor 402 that may be stored on one or more computer readable storage medium (disk, memory etc) 404 to be executed by such one or more processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores one or more computer program 406 comprising computer program instructions (computer program code) that controls the operation of the host when loaded into the processor 402. The computer program instructions, of the computer program 406, provide the logic and routines that enables the apparatus to perform the methods illustrated and described. The processor 402 by reading the memory 404 is able to load and execute the computer program 406.

The apparatus 400 therefore comprises:

at least one processor 402; and
at least one memory 404 including computer program code
the at least one memory 404 and the computer program code configured to, with the at least one processor 402, cause the apparatus 400 at least to perform:

use visual feature matching for a detected object 42 in a first field of view 30_1 of a first camera 10_1 to identify the detected object 42 in the first field of view 30_1 of the first camera 10_1 as a first object 40; and
use an expected location 50 of the first object 40 in a second field of view 30_2 of a second camera 10_2 to identify a detected object 42 in the second field of view 30_2 as the first object 40, wherein the second camera 10_2 is different to the first camera 10_1 and the second field of view 30_2 is different to the first field of view 30_1.

As illustrated in Fig 8, the computer program 406 may arrive at the host via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The host may propagate or transmit the computer program 406 as a computer data signal.

Computer program instructions for causing an apparatus to perform at least the following or for performing at least the following:

using visual feature matching for a detected object 42 in a first field of view 30_1 of a first camera 10_1 to identify the detected object 42 in the first field of view 30_1 of the first camera 10_1 as a first object 40; and
using an expected location 50 of the first object 40 in a second field of view 30_2 of a second camera 10_2 to identify a detected object 42 in the second field of view 30_2 as the first object 40, wherein the second camera 10_2 is different to the first camera 10_1 and the second field of view 30_2 is different to the first field of view 30_1

**EP 4 290 472 A1**

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

As used here 'module' refers to a unit or apparatus that excludes certain parts/components that would be added by an end manufacturer or a user. The controller 400 can be a module. A camera 10 can be a module.

The above-described examples find application as enabling components of:
automotive systems; telecommunication systems; electronic systems including consumer electronic products; distributed computing systems; media systems for generating or rendering media content including audio, visual and audio visual

19

content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. A system comprising:

   multiple cameras including at least a first camera having a first field of view and a second camera having a second field of view, wherein the second camera is different to the first camera and the second field of view is different to the first field of view; and
   identification means for

      - identifying an object captured by one or more of the multiple cameras, wherein the identification means comprises means for:

- using visual feature matching for a detected object in the first field of view of the first camera to identify the detected object in the first field of view of the first camera as a first object; and
- using an expected location of the first object in the second field of view of the second camera to identify a detected object in the second field of view as the first object.

2. A system as claimed in claim 1, comprising means for tracking the identified object across fields of view of different cameras of the multiple camera system using an expected location of the first object in the fields of view of the different cameras.

3. A system as claimed in claim 1 or 2, comprising means for using visual feature matching for the detected object in the first field of view of the first camera to identify the detected object in the first field of view of the first camera as the first object, wherein the visual feature matching is performed at the first camera or wherein the visual feature matching is distributed across the first camera and at least one other camera of the multiple cameras.

4. A system as claimed in any preceding claim, comprising, at the second camera, means for using an expected location of the first object in the second field of view of the second camera to identify the detected object in the second field of view as the first object.

5. A system as claimed in any preceding claim wherein the first camera comprises means for providing to other ones of the multiple cameras an indication of a location of the detected object in the first field of view of the first camera and an indication of the identity of the detected object as the first object.

6. A system as claimed in claim 5, configured such that the indication of the location of the detected object in the first field of view of the first camera is provided as an indication of a bounding box location.

7. A system as claimed in claim 5 or 6, configured such that the indication of the location of the detected object in the first field of view of the first camera is provided to a selected sub-set of the multiple cameras based on the location of the detected object in the first field of view and a spatial relationship of overlapping fields of view of the other ones of the multiple cameras.

8. A system as claimed in claim 7, comprising means for selecting the sub-set of the multiple cameras based on an expected location of the first object relative to the fields of views of the multiple cameras wherein the expected location of the first object lies within the fields of view of the cameras in the sub-set and wherein the expected location of the first object lies outside the fields of view of the cameras not in the first sub-set.

9. A system as claimed in any preceding claim, comprising means for selecting a sub-set of a field of view of a camera for object detection based on the expected location of the first object in the field of view.

10. A system as claimed in any preceding claim, configured to determine the expected location of the first object in the second field of view of the second camera, wherein the second field of view is constrained to be simultaneous with or contemporaneous with the first field of view of the first camera or is constrained to directly follow in time the first field of view of the first camera or is constrained to have a temporal relationship with the first field of view of the first camera that maintains a calculated uncertainty in the expected location below a threshold level.

11. A system as claimed in any preceding claim, wherein the first field of view partially overlaps the second field of view at a first overlapping field of view, and at least a third camera in the multiple camera system has a third field of view that partially overlaps the second field of view at a second overlapping field of view, but does not overlap the first overlapping field of view,
the system comprising means for:

identifying the detected object in the first field of view, outside the first overlapping field of view, as the first object;
detecting when the detected object, identified as the first object, in the first field of view enters the first overlapping field of view, and consequently identifying a corresponding detected object in the second field of view, inside the overlapping field of view, as the first object;
detecting when the detected object, identified as the first object, in the second field of view enters the second overlapping field of view, and consequently identifying a corresponding detected object in the third field of view, inside the second overlapping field of view, as the first object.

**12.** A system as claimed in any preceding claim, comprising means for;

matching visual features for a target object in the fields of view of the multiple cameras to identify the target object in one or more field of view of the multiple cameras;

creating a sequence of cameras and performing the visual feature matching for the target object in the fields of view of the cameras in the order of the created sequence to identify the target object in one or more field of view of the cameras in the created sequence; and/or creating a sequence of detected objects and performing visual feature matching for the target object for the detected objects in the order of the created sequence to identify the target object.

**13.** An apparatus comprising identification means for identifying an object captured by a multiple camera system, wherein the identification means comprises means for:

using visual feature matching for a detected object in a field of view of the camera to identify the detected object in the field of view of the camera as a first object; and

using an expected location of the first object in a second field of view of a second camera to identify a detected object in the second field of view as the first object, wherein the second camera is different to the camera and the second field of view is different to the field of view.

**14.** A computer program comprising instructions that, when executed by the at least one processor, cause:

using visual feature matching for a detected object in a first field of view of a first camera to identify the detected object in the first field of view of the first camera as a first object; and

using an expected location of the first object in a second field of view of a second camera to identify a detected object in the second field of view as the first object, wherein the second camera is different to the first camera and the second field of view is different to the first field of view.

**15.** A computer implemented method comprising:

using visual feature matching for a detected object in a first field of view of a first camera to identify the detected object in the first field of view of the first camera as a first object; and

using an expected location of the first object in a second field of view of a second camera to identify a detected object in the second field of view as the first object, wherein the second camera is different to the first camera and the second field of view is different to the first field of view.

100

10_1

12_1

Camera → DETECT OBJECT

42 →

20

22

ID: Visual

24

ID: Location

26 →

10_2

12_2

Camera → DETECT OBJECT

42 →

FIG. 1

FIG. 2A

10_2

10_1

100

10_3

FIG. 2B

10_2

10_1

10_3

100

110

10_4

FIG. 3

FIG. 4

FIG. 5

200

| | |
|---|---|
| 202 | Identification: Visual Matching |

| | |
|---|---|
| 204 | Identification: Expected Location |

FIG 6

400

Processor 402

Memory 404

406

FIG 7

406 408

FIG 8

Europäisches
Patentamt

European
Patent Office

Office européen
des brevets

# EUROPEAN SEARCH REPORT

Application Number

EP 22 17 7431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG XIAOGANG ED – CALDERARA SIMONE ET AL: "Intelligent multi-camera video surveillance: A review", PATTERN RECOGNITION LETTERS, vol. 34, no. 1, 20 July 2012 (2012-07-20), pages 3-19, XP028955937, ISSN: 0167-8655, DOI: 10.1016/J.PATREC.2012.07.005 * sect.3 to sect.5 * | 1,2, 4-11, 13-15 | INV. G06V20/52 |
| X | JANG SI YOUNG ET AL: "Application-Aware IoT Camera Virtualization for Video Analytics Edge Computing", 2018 IEEE/ACM SYMPOSIUM ON EDGE COMPUTING (SEC), IEEE, 25 October 2018 (2018-10-25), pages 132-144, XP033468907, DOI: 10.1109/SEC.2018.00017 * sect.I – IV * | 1,2,4-15 | |
| A | CHRISTOPHER NEFF ET AL: "REVAMP^2T: Real-time Edge Video Analytics for Multi-camera Privacy-aware Pedestrian Tracking", ARXIV.ORG, CORNELL UNIVERSITY LIBRARY, 201 OLIN LIBRARY CORNELL UNIVERSITY ITHACA, NY 14853, 21 November 2019 (2019-11-21), XP081536754, DOI: 10.1109/JIOT.2019.2954804 * sect.I-V * | 1,2,4-15 | TECHNICAL FIELDS SEARCHED (IPC) G06V |

The present search report has been drawn up for all claims

| Place of search | Date of completion of the search | Examiner |
|---|---|---|
| The Hague | 22 November 2022 | Darolti, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 17 7431**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1, 2, 4-15**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

**Application Number**

EP 22 17 7431

The Search Division considers that the present European patent application does not comply with the requirements of unity of invention and relates to several inventions or groups of inventions, namely:

**1. claims: 1, 2, 4-15**

1) Claims 2, 4, 9, 10, 11: tracking the identified object across one, two or three different cameras using an expected location of the first object calculated using spatio-temporal modelling and constraints
3) Claims 5-8 : a camera providing to other cameras location and identity of the detected objects, the other cameras being selected based on the spatial relationship of the other cameras and expected position of the object
4) Claim 12 : creating a sequence of cameras and/or of detected objects and performing the visual feature matching in said order to identify the object
---

**2. claim: 3**

2) Claim 3 : visual feature matching being performed at the first camera or is distributed across the first and at least one other camera.
---